Europäisches Patentamt

European Patent Office

Office européen des brevets

(11) Publication number: **0 109 196**
**A1**

(12) **EUROPEAN PATENT APPLICATION**

(21) Application number: **83306270.6**

(22) Date of filing: **17.10.83**

(51) Int. Cl.³: **C 04 B 31/06, C 04 B 43/02**

(30) Priority: **15.11.82 US 441823**

(43) Date of publication of application: **23.05.84**
**Bulletin 84/21**

(84) Designated Contracting States: **BE DE FR GB IT SE**

(71) Applicant: **THE BABCOCK & WILCOX COMPANY, 1010 Common Street P.O. Box 60035, New Orleans Louisiana 70160 (US)**

(72) Inventor: **Farmer, Robert L., 4016 Summit Street, Lynchburg Virginia 24503 (US)**
Inventor: **Long, William G., 1407 Brookville Lane, Lynchburg Virginia 24502 (US)**
Inventor: **Johnson, Thomas A., 208 Buckingham Drive, Lynchburg Virginia 24502 (US)**

(74) Representative: **Cotter, Ivan John et al, D. YOUNG & CO. 10 Staple Inn, London WC1V 7RD (GB)**

(54) **Machinable fibre boards.**

(57) A fibrous refractory product for use in molten aluminium applications contains no asbestos and is made from a slurry of ceramic refractory fibre and calcium aluminate cement. The dried product is readily machinable using standard woodworking machines and techniques.

EP 0 109 196 A1

1

## MACHINABLE FIBRE BOARDS

This invention relates to machinable fibre boards.

In the handling of molten aluminium and its alloys, it is highly desirable to utilise refractory products per se, or refractory lined parts having low thermal conductivity, which are chemically inert to the molten metal. These products may, for example, take the form of pressed boards used for baffles or lining launder systems, or tubular members through which the molten metal may be poured during a transfer process.

The machinability of these products is important because machining in the aluminium industry is generally accomplished using standard woodworking machines and techniques. Since a wide variety of shapes are utilised, it is more economical to machine parts than to order sized components. Typical applications may require cutting, drilling, tapping, trepanning, thread grinding or milling, sanding, the use of forming tools such as lathes to form curved surfaces or surfaces of stepped, angular or irregular shape, or techniques which otherwise produce an edge which must be retained in service. For example, a continuous thread may be turned on a tubular member.

Materials have been used in the part which also possessed other desirable properties for success in molten aluminium applications, such as dimensional stability, spall resistance, and resistance to thermal and mechanical shock. Fibrous refractories, such as are disclosed in U.S. Patents Nos. 3 269 849 and 3 294 562, are known to have particuar utility in this regard. However, such refractories contain predominant amounts of asbestos fibres, and asbestos has now been linked to being a cause of at least three major diseases - asbestosis, lung cancer and mesothelioma. Due to the fact that many aluminium shops have become accustomed to working with woodworking machines and techniques which may generate atmospheric contaminants, it has become highly undesirable to utilise refractories having asbestos fibres. Many fibrous refractory compositions, however, cannot be used in lieu of asbestos fibre systems since, in application, the fibres or the composition would either disintegrate (react to molten aluminium), have insufficient heat resistance, or otherwise not exhibit the desired properties described above with respect to molten aluminium exposure.

Thus, there exists a need for a suitable substitute for the asbestos refractory products, which substitute is amenable to the machining operations described while having characteristic properties similar to those of previously used asbestos fibrous refractories.

Fibrous refractories using clay as a binder are disclosed in U.S. Patents Nos. 3 510 394, 3 348 957 and 4 257 812.

The present invention provides a machinable fibre board comprising a refractory fibre, a calcium aluminate cement and, optionally, a small amount of clay as a binder. More specifically, the board may comprise 10% to 90% calcium aluminate cement and 10% to 90% refractory fibre; and may comprise clay in an amount less than 15 weight %.

Preferred embodiments of the present invention described hereinbelow comprise a refractory fibre and calcium aluminate cement machinable refractory product, for use in molten aluminium applications, which contains no asbestos and yet possesses advantageous properties similar to products which contain asbestos.

In a preferred technique of making these preferred products, a composition comprising refractory ceramic fibre, calcium aluminate cement, additives and water is pressed or extruded into a desired shape and then dried to remove the mechanical water. The dried product is then machined for its particular use.

The preferred products are low density refractory fibre and cement products which are capable of use with molten aluminium. Further, the preferred products have excellent machinability properties using standard woodworking machines and techniques.

The fibre used in the boards may be either the common aluminosilicate fibre of 5 to 95 wt% alumina (the balance being mostly $SiO_2$), fibreglass, or one of the many mineral wool fibres made from such raw materials as sandstone, limestone, steel mill slag, etc. A suitable aluminosilicate ceramic fibre is that produced under the trademark "KAOWOOL". KAOWOOL ceramic fibre typically has a chemical composition of 45% alumina and 52% silica and small amounts of impurities. This ceramic fibre has a melting point of about $1760^{\circ}C$ ($3200^{\circ}F$), low thermal conductivity, low heat capacity, and is extremely resistant to thermal shock.

Suitable calcium aluminate cements for use in the boards are Refcon, available from Lehigh Portland Cement Company of Allentown, Pennsylvania, U.S.A. and CA-25 available from the Aluminum Company of America of Bauxite, Arkansas, U.S.A. Calcium aluminate cements are preferred over Portland cements, since calcium aluminate cements can withstand the temperatures at which the machinable fibre boards will be used. The amount of cement used is in the range of 10% to 90% by weight, based on the total weight of the cement and fibre, which in turn affects the final properties of the board. In general, using more cement results in a harder, denser, stronger board with an increased thermal conductivity. There also exists a threshold of the cement to fibre ratio, below which good machinability using standard woodworking techniques would be difficult. This ratio is approximately 1:8. The cement content probably has little effect on the maximum use temperature and the ability to withstand molten aluminium attack.

Additives, such as bentonite clay, kaolin clay, alumina (bauxite) and pyrophyllite, can be added in amounts of 0% to 25% in order to enhance the forming properties of the mixture and the resulting strength of the board. The addition of greater amounts of clay results in very slow water removal during forming. The effects of these additions on mechanical strength, machinability, molten aluminium contact and refractoriness (temperature resistance) are not thoroughly understood, but thought to be minimal. Other additives which performed well as binders were colloidal silica and colloidal alumina. Retarders like citric acid and boric acid may be added to affect the hydration of the cement. It will be understood by those skilled in the art that flocculants can be added to consolidate finely divided particles of cement in the slurry in order to prevent their loss during dewatering and to facilitate water removal. Examples of flocculants which have given good results are acids, alkalis, or charged materials such as anionic or cationic long chain polymers or charged starches.

A particularly preferred form of board in accordance with the invention, for handling molten aluminium, is characterised in that it has a density of 801 to 1041 kg/m$^3$ (50 to 65 lb/ft$^3$), is free of asbestos, and consists essentially of about 70 to 80% calcium aluminate cement, 20 to 30% refractory fibre and 0 to 10% of an additive selected from clay, alumina and hydrous aluminium silicate.

In a preferred process of making the machinable fibre board the refractory fibre is blended with the cement and water. Though several methods can be used to form machinable boards from this composition, slurry pressing is often used. Other methods which can be used include casting the mix into a mould or pressing a non-slurry type mix to shape. The fibre and cement and other additives are mixed in water to form a slurry comprising approximately 15 weight % solids. The actual amount of water added to the mixture of fibres and cement depends upon the type of forming process used and the intended use of the product. The consistency of 15 weight % solids is not critical in order to obtain a satisfactory product. After mixing, the slurry is placed in a mould and pressed with porous punches which squeeze out most of the water. This wet, pressed shaped is dried to yield the final shape. The dried unfired shape may then be machined using standard woodworking tools and techniques. Whether or not the product is fired depends upon the intended final use.

This invention may be more clearly understood by reference to the twelve illustrative and non-limiting examples tabulated below. In all of these examples the constituents, in the proportions shown, which are based on the total solid weight, were mixed with water to form a slurry of about 15 weight % solids. After mixing, the slurry was placed in a mould and pressed to dewater the slurry. The wet, pressed shape was allowed to dry to yield the final product. Example 7 was immersed in molten aluminium alloy 7075, which is known to cause the most severe problems for refractory materials, for 48 hours at $760^{\circ}$C ($1400^{\circ}$F). The fibre board showed no signs of chemical attack or molten aluminium penetration.

BAD ORIGINAL

| EXAMPLE | CEMENT<br>Calcium Aluminate Cement | FIBRE | | ADDITIVES | | | | | DENSITY |
|---|---|---|---|---|---|---|---|---|---|
| | | Kaowool | Mineral Wool | Bauxite | Bentonite | Colloidal Alumina | Colloidal Silica | Kaolin Clay | kg/m³ (lb/ft³) |
| 1 | 65% | 25% | -- | 10% | -- | -- | -- | -- | -- |
| 2 | 65% | -- | 25% | 10% | -- | -- | -- | -- | -- |
| 3 | 70% | -- | 27% | -- | 3% | -- | -- | -- | -- |
| 4 | 68% | | 26% | -- | 6% | -- | -- | -- | -- |
| 5 | 71% | 27% | -- | -- | 2% | -- | -- | -- | 801 (50) |
| 6 | 76% | 22% | -- | -- | 2% | -- | -- | -- | 1041 (65) |
| 7 | 63% | 25% | -- | -- | 2% | -- | 10% | -- | -- |
| 8 | 50% | 50% | -- | -- | -- | -- | -- | -- | 545 (34) |
| 9 | 65% | 35% | -- | -- | -- | -- | -- | -- | 641 (40) |
| 10 | 25% | 50% | -- | -- | -- | -- | -- | 25% | 561 (35) |
| 11 | 35% | 50% | -- | -- | -- | -- | -- | 15% | 545 (34) |
| 12 | 40% | 50% | -- | -- | -- | 10% | -- | -- | 529 (33) |

## CLAIMS

1.    A machinable fibre board, characterised in that it comprises 10% to 90% calcium aluminate cement and 10% to 90% refractory fibre.

2.    A machinable fibre board according to claim 1, wherein the refractory fibre is selected from alumino-silicate, fibreglass or mineral wool.

3.    A machinable fibre board according to claim 1 or claim 2, wherein the fibre board comprises clay in an amount less than 15 weight %.

4.    A machinable fibre board according to claim 1, claim 2 or claim 3, wherein the board has a density of about 400 to 1442 kg/m$^3$ (25 to 90 lb/ft$^3$).

5.    A machinable fibre board for handling molten aluminium, characterised in that it has a density of 801 to 1041 kg/m$^3$ (50 to 65 lb/ft$^3$), is free of asbestos, and consists essentially of about 70 to 80% calcium aluminate cement, 20 to 30% refractory fibre and 0 to 10% of an additive selected from clay, alumina and hydrous aluminium silicate.

**European Patent Office**

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | US-A-4 309 371  (J. DAVIOT et al.)<br>* Claim 1 * | 1,2 | C 04 B   31/06<br>C 04 B   43/02 |
| A | * Claim 1 * | 5 | |
| X | FR-A-2 297 818  (GROUPEMENT POUR LES ACTIVITES ATOMIQUES ET AVANCEES "GAAA")<br>* Claims 1,2; page 2, lines 4-9 * | 1,2 | |
| X | FR-A-2 203 788  (GROUPEMENT ATOMIQUE ALSACIENNE ATLANTIQUE)<br>* Claims 1,2,4 * | 1,2 | |
| X | DE-C-1 021 290  (H. BÖRDLEIN)<br>* Claim * | 1,2 | **TECHNICAL FIELDS SEARCHED (Int. Cl. ³)** |
| X | Soviet Inventions Illustrated Week E13, 12 May 1982, Section L02 & SU-A-833909 | 1-3 | C 04 B   31/04<br>C 04 B   31/06<br>C 04 B   43/02 |
| A | GB-A-1 166 380  (CARBORUNDUM CO.)<br>* Claims 1,2,6 * | 1,2,4,5 | |

The present search report has been drawn up for all claims

| Place of search<br>BERLIN | Date of completion of the search<br>20-01-1984 | Examiner<br>STROUD J.G. |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03.82